# EUROPEAN PATENT APPLICATION

(11) **EP 2 938 087 A1**
(43) Date of publication of application: **28.10.2015**
(21) Application number: 14305604.2
(22) Date of filing: 24.04.2014
(51) Int. Cl.: H04N 21/235, H04N 21/488, H04N 21/854, H04N 21/81

(54) **Method and apparatus for amending digital cinema package data with associated subtitle track data**

(71) Applicant: Thomson Licensing, 92130 Issy-les-Moulineaux (FR)
(72) Inventor: Arrighetti, Walter, 30625 Hannover (DE)
(74) Representative: Hartnack, Wolfgang

(57) **Abstract**

Subtitle tracks (502) in a Digital Cinema Package (DCP) are exploited for adding vector-graphics symbols to the pictorial content of a Digital Cinema asset, wherein such symbols serve as technical hooks or placeholders for hiding or obfuscating parts or whole frames/clips of the video content, or for anti-piracy purposes, or for embedding watermarks. An advantage is that only very small computation resources are required for creating additional DCP(s) with one or more such-tailored subtitle tracks, starting from an existing DCP.

## Description

### Technical field

The invention relates to a method and to an apparatus for amending Digital Cinema Package data with associated subtitle track data, wherein the amendment provides subtitle data which serve for a different purpose.

### Background

As a Digital Cinema distribution format, Digital Cinema Packages (DCP) was originally intended as final asset for theatrical screening of feature films and related contents, e.g. trailers and advertising.

### Summary of invention

Digital cinema content distribution takes place in many countries, in which different legal requirements are to be observed. Therefore it is desirable to easily embed non-textual information (as well as hiding, altering, proofing or watermarking video content) in a DCP using a cost-effective, time-saving exploit of re-wrapped subtitle tracks, as allowed by the related DCI and SMPTE specifications.

A problem to be solved by the invention is to provide low-effort video content modification in Digital Cinema Packages. This problem is solved by the method disclosed in claim 1. An apparatus that utilises this method is disclosed in claim 2.

Advantageous additional embodiments of the invention are disclosed in the respective dependent claims.

According to the invention, 'subtitle tracks' in a Digital Cinema Package (DCP) are exploited for adding vector-graphics symbols to the pictorial content of a Digital Cinema asset. Such symbols do not represent strictly textual elements like subtitles, narrative cards, but rather serve as technical hooks or placeholders for obfuscating parts or whole frames/clips of the video content, or for anti-piracy purposes, or for embedding watermarks.

An advantage is that only very small computation resources are required (for CPU/GPU as well as for software and storage/bandwidth requirements) for creating additional DCP(s) with one or more such-tailored subtitle tracks (called 'DCP re-wrapping'), starting from a pre-existing DCP or DCM (Digital Cinema Media). It allows to re-wrap with low effort a high number of different DCPs featuring such exploit.

In addition, the Digital Cinema KDM (Key Delivery Message)/encryption mechanism ensures that the newly created DCP cannot be easily un-wrapped, e.g. by separating the added exploited subtitle tracks and recovering the original content.

In principle, the inventive method is suited for amending Digital Cinema Package data with associated first subtitle track data, wherein from said Digital Cinema Package data and said first subtitle track data one or more hash values are generated and provided, said method including the steps:
- amending said first subtitle track data by adding characters to said first subtitle track data, so as to provide corresponding amended subtitle track data the glyphs of which, instead of representing one or more subtitles for the Digital Cinema Package data, will upon presentation form a glyph sequence or adjacent glyph sequences which completely hide or obfuscate parts of the content of video frames of said Digital Cinema Package data;
- generating from said Digital Cinema Package data and from said amended subtitle track data amended Digital Cinema Package data with associated second subtitle track data different from said first subtitle track data,
and generating and providing from said amended Digital Cinema Package data and said second subtitle track data one or more hash values.

In principle the inventive apparatus is suited for amending Digital Cinema Package data with associated first subtitle track data, said apparatus including:
- a stage which provides said Digital Cinema Package data and associated first subtitle track data;
- a stage which generates and provides from said Digital Cinema Package data and said first subtitle track data one or more hash values;
- a stage which amends said first subtitle track data by adding characters to said first subtitle track data, so as to provide corresponding amended subtitle track data the glyphs of which, instead of representing one or more subtitles for the Digital Cinema Package data, will upon presentation form a glyph sequence or adjacent glyph sequences which completely hide or obfuscate parts of the content of video frames of said Digital Cinema Package data;
- a stage which generates from said Digital Cinema Package data and from said amended subtitle track data amended Digital Cinema Package data with associated second subtitle track data different from said first subtitle track data;
- a stage which and generates and provides from said amended Digital Cinema Package data and said second subtitle track data one or more hash values.

### Brief description of drawings

Exemplary embodiments of the invention are described with reference to the accompanying drawings, which show in:
- Fig. 1: true type fonts appearing as pictorial glyphs;
- Fig. 2: a monospace huge-size glyph for a subdivision of a 2K Cinemascope-ratio (2.39:1) frame of a DCP by 12x3 grids;
- Fig. 3: an example monospace solid-block glyph;
- Fig. 4: an example dithered-block glyph;
- Fig. 5: DCP generatation according to the invention.

### Description of embodiments

Even if not explicitly described, the following embodiments may be employed in any combination or sub-combination.

Digital Cinema Packages (DCPs) are a file-based distribution format for audio-visual content aimed at theatrical screening, and initially they were not developed for purposes different from theatrical distribution.

DCPs are becoming a de-facto standard for masters or copies delivered to non-theatrical players too, like film archives, broadcasters and even postproduction / dubbing studios. In some sense, and at least not until dedicated mezzanine / master formats become standardised (cf. SMPTE Interoperable Master Format, loosely based on and inspired by the DCI specifications themselves), DCPs will be used for those farfetched functions as well.

Textual elements in a DCP (e.g. subtitles, narrative cards, titles), especially those that require no more than trivial graphic design (e.g. borders' thickness and unique colour; fading times; simple positioning; in case of Stereoscopic 3D assets, relative parallax between the two stereograms) can be either rendered over the video frames or included in one or more XML 'subtitle tracks' (abiding to SMPTE specifications) that are shipped along with the DCP.

This allows for the creation of a new DCP starting from one with either different or no textual elements at all. The latter way, called re-wrapping includes the text and its graphic specifications written in XML, where the text glyphs are store in one or more TrueType/OpenType fonts. The re-wrapping process only involves the computation of a new hash for the new DCP, which is then stored in the associated Composition PlayList (CPL) file.

Remark: it appears that such a tailored DCP cannot be reverse-engineered without invalidating it. This because every file in a DCP (including the subtitle tracks' XML files and the TrueType font file themselves) is cryptographically hashed against the KDM. Changing even one bit of the whole package (be it either the MXF audio/video essences, or the font glyphs, as well as the XML-based, clear-text metadata) invalidates the associated Composition Playlist (CPL), thus resulting in every Digital Cinema server / player denying to decode and play back the whole DCP.

If the DCP is encrypted even if the textual elements are written clearly on the XML file (provided that there is a known correspondence between the XML file's Unicode characters and the ordered glyphs in the TrueType font), no forging of the DCP is possible because the hashing that is generated during the re-wrapping includes all the subtitle files themselves: XMLs and TrueType's.

The invention is therefore a method for embedding non-pictorial and non-literary content into a DCP by using forged TryeType font characters whose glyphs are non-literary. Combining such glyphs (disposed in temporal patterns along the timeline, as well as across a spatial pattern across each single frame, as described by the XML subtitle tracks) allows for adding virtually any information, as well as hiding it.

I.e., the subtitle track data are amended by adding characters to the already existing subtitle track data, so as to provide corresponding amended subtitle track data the glyphs of which, instead of representing one or more subtitles for the Digital Cinema Package data, will upon presentation e.g. in a cinema form a glyph sequence or adjacent glyph sequences which completely hide or obfuscate parts of the content of video frames of the Digital Cinema Package data.

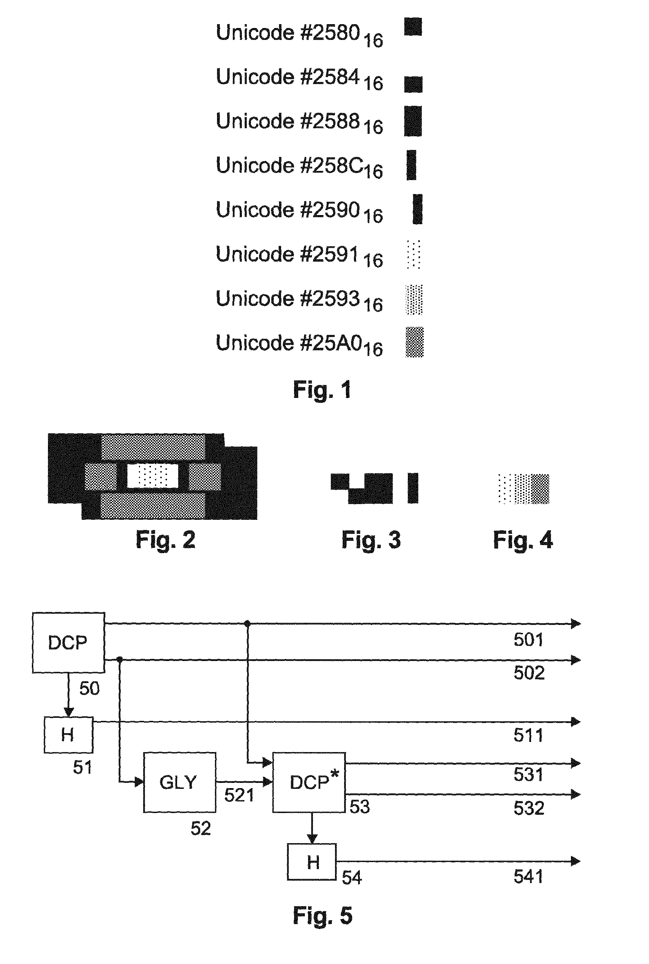

Many standard, common-usage TrueType fonts like Arial have a restricted selection of characters representing 'pictorial' glyphs, like the glyphs shown in Fig. 1:
Unicodes #2580₁₆, #2584₁₆, #2588₁₆, #258C₁₆, #2590₁₆, #2591₁₆, #2593₁₆, #25A0₁₆, wherein the lowercase '₁₆' means that the glyph codes are transcribed in hexadecimal base.

Fig. 2 depicts a subdivision of a 2K Cinemascope-ratio (2.39:1) frame of a DCP by 12x3 grids where a monospace, huge-size glyph ensemble from the Arial font is formed that could be added for 'covering' a part of an image.

Since such fonts have well-defined sizes relative to the HD-, 2K- or 4K-size in a DCI specification, they can be combined to partially or totally obfuscate pieces of frames. The ability to specify and change the fonts, font attributes and position with time (along a timeline) allows for dynamic change of such information.

Using large enough fonts (e.g. by dividing the 2K Cinemascope-ratio frame in a 12x3 grid above where monospace characters can be places, eventually being adjacent to each other in case they are completely 'occlusive'), it is possible to carry out the below embodiments in a re-wrapped DCP (explicated as different).

If the so-used subtitle tracks were to be rendered in a 'versioned' DCP, a new video essence would need to be recreated, which is particularly time-consuming and resource-consuming task. Besides, this does not make it feasible to add customised information (on a per-client, per-studio or even per-theatre basis). However, the possibility to embed subtitle tracks as 'metadata only' XML tracks allows quick re-wrapping times (hashes need be recomputed, which is straightforward and relatively fast by dedicated Digital Cinema mastering appliances) and makes feasible delivering customised or semi-customised DCPs.

### First embodiment

Using a combination of monospace solid-block glyphs (like those in the Fig. 3 sequence) and dithered-block glyphs (like those in the Fig. 4 triple), for censorship purposes specific parts of a whole sequence can be completely hidden and for other or adjacent parts the visibility can be hampered, for a limited selection of DCP distributions (e.g. festivals, private copies, press screenings). Only the parts of the frame where violent and/or nudity elements appear on screen can be either covered or blurred by a dithering pattern.

### Second embodiment

Copies for dubbing (for studios requiring a DCP rather than a mezzanine file-based copy or a tape copy) can be used to completely or partially obfuscate all the parts of a screen but the ones containing elements useful for dubbing, like the actors' mouths and some outstanding gestures.

### Third embodiment

Especially useful on non-full-feature DCPs, especially advertisements, QR-code fonts can be added to specific parts of the DCP for inviting users to point their smartphones over there for accessing personalised second-screen content during the projection (which also exposes the position of possible cameras in the theatre room).

In Fig. 5 a DCP step or stage 50 outputs DCP file data 501 and related subtitle track data 502. A first hash value calculator 51 calculates and outputs one or more hash values 511 for the DCP file data and subtitle track data. The DCP file data 501 are fed to an amended DCP step or stage 53, and the subtitle track data 502 are fed to a character insertion step or stage 52, in which suitable characters as described above are added to the existing subtitle data, e.g. for hiding sections of a video scene. The amended subtitle track data 521 are fed to amended DCP step/stage 53, which outputs amended DCP file data 531 and related amended subtitle track data 532. A second hash value calculator 54 calculates and outputs one or more hash values 541 for the amended DCP file data and the amended subtitle track data.

The inventive processing can be carried out by a single processor or electronic circuit, or by several processors or electronic circuits operating in parallel and/or operating on different parts of the inventive processing.

The invention can be applied to any titling system that uses and keeps literary metadata (e.g. subtitle files, fonts, etc.) instead of burning them on the film footage raster.

## Claims

1. Method for amending Digital Cinema Package (DCP) data (501) with associated first subtitle track data (502), wherein from said Digital Cinema Package data and said first subtitle track data one or more hash values (511) are generated (51) and provided, said method including the steps:
- amending (52) said first subtitle track data (502) by adding characters to said first subtitle track data, so as to provide corresponding amended subtitle track data (521) the glyphs of which, instead of representing one or more subtitles for the Digital Cinema Package data, will upon presentation form a glyph sequence or adjacent glyph sequences which completely hide or obfuscate parts of the content of video frames of said Digital Cinema Package data;
- generating (53) from said Digital Cinema Package data (501) and from said amended subtitle track data (521) amended Digital Cinema Package (DCP*) data (531) with associated second subtitle track data (532) different from said first subtitle track data,
and generating (54) and providing from said amended Digital Cinema Package data and said second subtitle track data one or more hash values (541).

2. Apparatus for amending Digital Cinema Package (DCP) data (501) with associated first subtitle track data (502), said apparatus including:
- a stage (50) which provides said Digital Cinema Package data (501) and associated first subtitle track data (502);
- a stage (51) which generates and provides from said Digital Cinema Package data and said first subtitle track data one or more hash values (511);
- a stage (52) which amends said first subtitle track data (502) by adding characters to said first subtitle track data, so as to provide corresponding amended subtitle track data (521) the glyphs of which, instead of representing one or more subtitles for the Digital Cinema Package data, will upon presentation form a glyph sequence or adjacent glyph sequences which completely hide or obfuscate parts of the content of video frames of said Digital Cinema Package data;
- a stage (53) which generates from said Digital Cinema Package data (501) and from said amended subtitle track data (521) amended Digital Cinema Package (DCP*) data (531) with associated second subtitle track data (532) different from said first subtitle track data;
- a stage (54) which and generates and provides from said amended Digital Cinema Package data and said second subtitle track data one or more hash values (541).

3. Method according to claim 1, or apparatus according to claim 2, wherein said added characters include one or more of the Unicodes #2580₁₆, #2584₁₆, #2588₁₆, #258C₁₆, #2590₁₆, #2591₁₆, #2593₁₆, #25A0₁₆.

4. Method according to the method of claim 1 or 3, or apparatus according to the apparatus of claim 2 or 3, wherein said amended Digital Cinema Package data are used when dubbing in a studio to completely or partially obfuscate all parts of a screen but the ones containing elements useful for dubbing, like the actors' mouths and outstanding gestures.

5. Method according to the method of claim 1 or 3, or apparatus according to the apparatus of claim 2 or 3, wherein said amended Digital Cinema Package data are used for adding QR-code fonts to parts of the Digital Cinema Package data, which QR-code fonts point to personalised second-screen content during projection of the Digital Cinema Package video content.
